# EUROPÄISCHE PATENTSCHRIFT

(11) **EP 1 416 172 B1**
(45) Veröffentlichungstag und Bekanntmachung des Hinweises auf die Patenterteilung: **14.12.2005**
(21) Anmeldenummer: 03019597.8
(22) Anmeldetag: 03.09.2003
(51) Int. Cl.: F16B 21/07

(54) **Steckkupplung mit dreidimensionaler Ausgleichsbewegung und pfannenartiges Kupplungsteil davon**
Plug connector with three-dimensional vibration absorption and cup thereof
Raccord emboîtable à amortissement de vibrations tridimensionnel et sa cuvette

(30) Priorität: 31.10.2002 DE 20216836 U
(43) Veröffentlichungstag der Anmeldung: 06.05.2004
(73) Patentinhaber: Böllhoff GmbH, 33649 Bielefeld (DE)
(72) Erfinder: Bertram, Andreas, 32107 Bad Salzuflen (DE); Süssenbach, Rainer, 33803 Steinhagen (DE)
(74) Vertreter: Wehnert, Werner

(56) Entgegenhaltungen:
- WO-A-99/13231
- DE-A- 10 036 429
- DE-A- 19 526 934
- DE-A- 19 836 108

## Beschreibung

Die vorliegende Erfindung betrifft eine Steckkupplung zum lösbaren Verbinden eines ersten Bauteils mit einem zweiten Bauteil sowie ein dieser entsprechendes pfannenartiges Kupplungsteil.

Aus der DE 198 36 108 A1 des Anmelders ist eine Steckkupplung bekannt, die aus einem elastisch verformbaren pfannenartigen Kupplungsteil und einem kugelartigen Kupplungsteil besteht. Das pfannenartige Kupplungsteil ist in eine an dem ersten Bauteil vorgesehene Fassung so einsetzbar, dass es darin formschlüssig gehalten wird. Es besteht aus einer Kugelpfanne, einer an dieser angeformten, als Einführabschnitt dienenden, ringförmigen Zwischenwand sowie einer an dieser angeformten rohrförmigen Außenwand, die die Kugelpfanne mit Abstand umgibt und beim Einsetzen des pfannenartigen Kupplungsteils in Anlage an eine Umfangswand der Fassung gelangt. Das kugelartige Kupplungsteil besteht aus einem Kugelkopf und einem Befestigungsabschnitt, der an dem zweiten Bauteil befestigbar ist.

Bei dieser vorbekannten Steckkupplung ist die als Einführkonus dienende Zwischenwand des pfannenartigen Kupplungsteils kegelstumpfförmig ausgebildet und durch Stege versteift, die sehnenartig zwischen der rohrförmigen Außenwand des pfannenartigen Kupplungsteils verlaufen und durch radiale Rippen mit der Außenseite der Kugelpfanne verbunden sind. Das pfannenartige Kupplungsteil besteht aus einem thermoplastischen Elastomer oder Gummi.

Diese Steckkupplung, die sich in der Praxis bestens bewährt hat, hat aufgrund ihrer Geometrie und des verwendeten Materials schwingungsdämpfende Eigenschaften, so dass sie für eine Schwingungsentkopplung zwischen den beiden Bauteilen sorgt. Allerdings sind die schwingungsentkoppelnden Relativbewegungen zwischen den beiden Bauteilen auf Richtungen quer zur Längsachse der Steckkupplung beschränkt, da die Steckkupplung in axialer Richtung aufgrund der erwähnten Stege relativ steif ist. Die Verwendung des relativ weichen thermoplastischen Elastomers bzw. gummiartigen Werkstoffes hat im übrigen für zumindest bestimmte Anwendungszwecke gewisse Nachteile wie z. B. einen eingeschränkten Festsitz der Steckverbindung und eine geringe Wärmeform- und Dieselölbeständigkeit.

Aus der DE 195 26 934 A1 ist ein gummielastisches Befestigungselement für ein Kunststoffgehäuse bekannt, das gemäß einer Ausführungsform aus einer konisch verlaufenden Wand besteht und bei einer anderen Ausführungsform einen abgewinkelten Bereich mit zwei Flanken hat, welche einerseits eine Lagekompensation ermöglichen und andererseits Schwingungsdämpfungseigenschaften aufweisen.

Der vorliegenden Erfindung liegt die Aufgabe zugrunde, eine Steckkupplung der oben angegebenen Gattung so weiterzubilden, dass sie eine Schwingungsentkopplung nicht nur quer zur Achse der Steckkupplung, sondern auch in beliebigen anderen Richtungen ermöglicht. Außerdem soll ein möglichst sicherer Festsitz der Steckverbindung wie auch eine erhöhte Chemikalien- und Wärmeformbeständigkeit der Steckkupplung ermöglicht werden.

Die Lösung der oben angegebenen Aufgabe wird durch die in Anspruch 1 definierte Steckkupplung und durch das in Anspruch 14 definierte pfannenartige Kupplungsteil gelöst.

Erfindungsgemäß ist die ringförmige Zwischenwand des pfannenartigen Kupplungsteils nicht als kegelstumpfförmiger Einführkonus ausgebildet, sondern hat im Längsschnitt ein wellenförmiges Profil. Das wellenförmige Profil der Zwischenwand wird durch eine einzelne, axial gerichtete, umlaufende Ausbuchtung der Zwischenwand gebildet. Zwischen der radial inneren und radial äußeren Wand der Ausbuchtung verlaufen Stege zum Versteifen der Ausbuchtung in axialer Richtung. Durch die Stege wird ein axiales Ausweichen der umlaufenden Ausbuchtungen des wellenförmigen Profils verhindert.

Durch das wellenförmige Profil ergibt sich eine erhöhte Nachgiebigkeit nicht nur in radialer, sondern auch in axialer Richtung. Das pfannenförmige Kupplungsteil kann daher schwingungsentkoppelnde Ausgleichsbewegungen sowohl in Achsrichtung wie auch quer zur Achse und somit in allen dazwischen liegenden Richtungen, also gewissermaßen dreidimensionale Ausgleichsbewegungen im Raum, ausführen. Dadurch werden die schwingungsentkoppelnden Eigenschaften der Steckkupplung entsprechend verbessert.

Dies wiederum bietet die Möglichkeit, das pfannenartige Kupplungsteil aus einem härteren Material herzustellen. Zwar kann das pfannenartige Kupplungsteil aus einem relativ weichen vernetzten Elastomer, insbesondere einem Gummi bzw. Kautschuk, hergestellt werden. Vorzugsweise wird das pfannenartige Kupplungsteil jedoch aus einem Elastomer auf Polyesterbasis mit guter Chemikalienbeständigkeit und Wärmeformbeständigkeit hergestellt. In Frage kommen hierbei in erster Linie Polybutylenterephthalat (PBT) und Polyethylenterephthalat (PET). Diese Materialien haben eine deutlich höhere Shore-Härte als ein vernetztes thermoplastisches Elastomer wie Gummi oder Kautschuk. Der Steckkupplung kann daher eine höhere Auszugsfestigkeit verliehen werden, so dass die Gefahr eines unbeabsichtigten Lösens verringert wird. Abgesehen von seiner Chemikalienbeständigkeit haben diese Materialien den Vorteil, dass sie sich mit hoher Präzision spritzgießen lassen; eine Nachbearbeitung des pfannenartigen Kupplungsteils ist dann nicht erforderlich. Die hohe Temperaturbeständigkeit (150° C und mehr) ermöglicht den Einsatz der Steckkupplung auch in temperaturkritischen Bereichen beispielsweise in Nähe eines Kraftfahrzeug-Motors.

Die ringförmige Zwischenwand mit dem wellenförmigen Profil kann eine gleichförmige Wandstärke haben. Vorzugsweise ist jedoch vorgesehen, dass die ringförmige Zwischenwand des pfannenartigen Kupplungsteils eine von radial innen nach radial außen größer werdende Wandstärke hat. Hierdurch wird erreicht, dass radiale schwingungsentkoppelnde Ausgleichsbewegungen des pfannenartigen Kupplungsteils im Kraftverlauf gleichmäßig ansteigend aufgenommen und ausgeglichen werden.

Weitere vorteilhafte Ausgestaltungen der Erfindung gehen aus den Unteransprüchen hervor.

Anhand der Zeichnungen werden Ausführungsbeispiele der Erfindung näher erläutert. Es zeigt:
Fig. 1 einen Längsschnitt durch eine erfindungsgemäß ausgebildete Steckkupplung im montierten und geschlossenen Zustand;
Fign. 2, 3 Schnittansichten in Blickrichtung der Pfeile II-II bzw. III-III;
Fig. 4 einen Längsschnitt durch das pfannenartige Kupplungsteil der Steckkupplung in Fig. 1;
Fig. 5 eine Draufsicht auf das pfannenartige Kupplungsteil in Fig. 4;
Fig. 6 eine Unteransicht des pfannenartigen Kupplungsteils in Fig. 4;
Fig. 7 eine perspektivische Draufsicht auf das pfannenartige Kupplungsteil in Fig. 4;
Fig. 8 eine perspektivische Unteransicht des pfannenartigen Kupplungsteils in Fig. 4;
Fig. 9 einen der Fig. 1 entsprechenden Längsschnitt durch eine abgewandelte Ausführungsform des pfannenartigen Kupplungsteils, allerdings ohne kugelartiges Kupplungsteil;
Fig. 10 einen Längsschnitt durch das pfannenartige Kupplungsteil der Steckkupplung in Fig. 9;
Fig. 11 eine Unteransicht des pfannenartigen Kupplungsteils in Fig. 10;
Fig. 12 einen Längsschnitt durch eine weitere Ausführungsform des pfannenartigen Kupplungsteils;
Fig. 13 eine vergrößerte Teilschnittansicht des pfannenartigen Kupplungsteils in Fig. 4;
Fig. 14 eine vergrößerte Teilschnittansicht des pfannenartigen Kupplungsteils in Fig. 10 bzw. Fig. 12;
Fig. 15 eine vergrößerte Teilschnittansicht der Kugelpfanne des pfannenartigen Kupplungsteils;
Fig. 16 eine der Fig. 15 entsprechende Schnittansicht, in der das kugelartige Kupplungsteil strichpunktiert angedeutet ist.

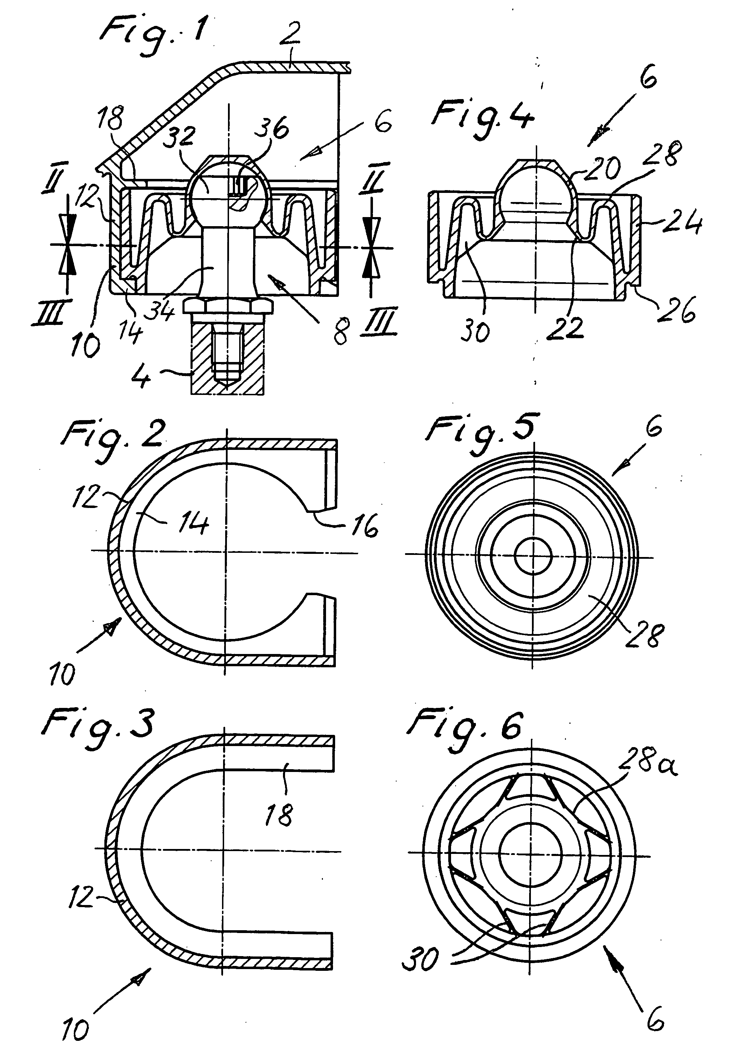

Die in Fig. 1 dargestellte Steckkupplung dient zum lösbaren Verbinden eines Bauteils 2 und eines Bauteils 4, bei denen es sich beispielsweise um eine abnehmbare Abdeckhaube bzw. einem Rahmen eines Kraftfahrzeuges handeln kann. Die Steckkupplung besteht aus einem pfannenartigen Kupplungsteil 6 und einem kugelartigen Kupplungsteil 8, von denen das pfannenartige Kupplungsteil 6 in eine Fassung 10 des Bauteils 2 einsetzbar ist und das kugelartige Kupplungsteil 8 am Bauteil 4 festlegbar ist.

Die Fassung 10, die im dargestellten Ausführungsbeispiel einstückig mit dem Bauteil 2 ausgebildet ist, besteht aus einer einseitig offenen, halbzylindrischen Umfangswand 12. An dem (in Fig. 1 unteren) axialen Ende der Umfangswand 12 ist ein radial nach innen vorstehender Ringbund 14 angeformt, der auf seiner einen Seite eine schlitzförmige Öffnung 16 hat, durch den das pfannenartige Kupplungsteil 6 seitlich in die Fassung 10 eingeführt werden kann, wie weiter unten noch genauer erläutert wird (Fig. 2). Im Bereich des oberen axialen Endes der Umfangswand 12 ist ein hufeisenförmiger Bund 18 vorgesehen (Fig. 3).

Wie in den Fign. 1 und 4 zu sehen ist, besteht das pfannenartige Kupplungsteil 6 aus einer einseitig offenen Kugelpfanne 20, einer am offenen Ende der Kugelpfanne 20 angeformten Zwischenwand 22 und einer an der Zwischenwand 22 angeformten rohrförmigen Außenwand 24, die im dargestellten Ausführungsbeispiel im wesentlichen zylindrisch ausgebildet ist. Die rohrförmige Außenwand 24 hat an ihrem (in Fig. 4 unteren) axialen Ende einen Rand 26, der mit einer kurzen axialen Verlängerung der Zwischenwand 22 eine Ringschulter bildet, die im montierten Zustand mit dem Ringbund 14 der Fassung 10 in Eingriff steht, wobei der obere Rand der Außenwand 24 an dem oberen Bund 18 der Fassung 10 abgestützt ist.

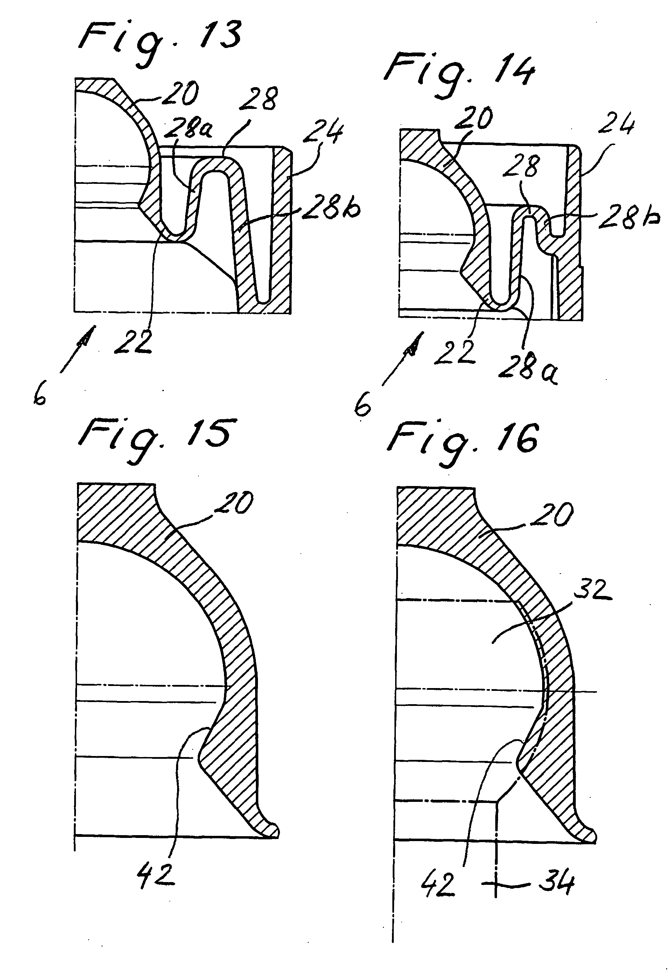

Die Zwischenwand 22 verbindet die Kugelpfanne 20 mit der rohrförmigen Außenwand 24, wobei ein an der Kugelpfanne 20 angeformter kurzer kegelstumpfförmiger Abschnitt als Einführkonus für das kugelartige Kupplungsteil 8 dient. Wie in den Fign. 1, 4 und insbesondere in Fig. 13 zu sehen ist, hat die Zwischenwand 22 im Längsschnitt ein wellenförmiges Profil, das in den dargestellten Ausfiihrungsbeispielen als einzelne umlaufende Ausbuchtung 28 ausgebildet ist. Die umlaufende Ausbuchtung 28 ist axial (in Fig. 13 nach oben) gerichtet und balgförmig ausgebildet, wobei die Innenwand 28a der Ausbuchtung 28 glatt in den kegelstumpfförmigen Ansatz der Kugelpfanne 20 übergeht und die Außenwand 28b am unteren axialen Ende der rohrförmigen Außenwand 24 angeformt ist.

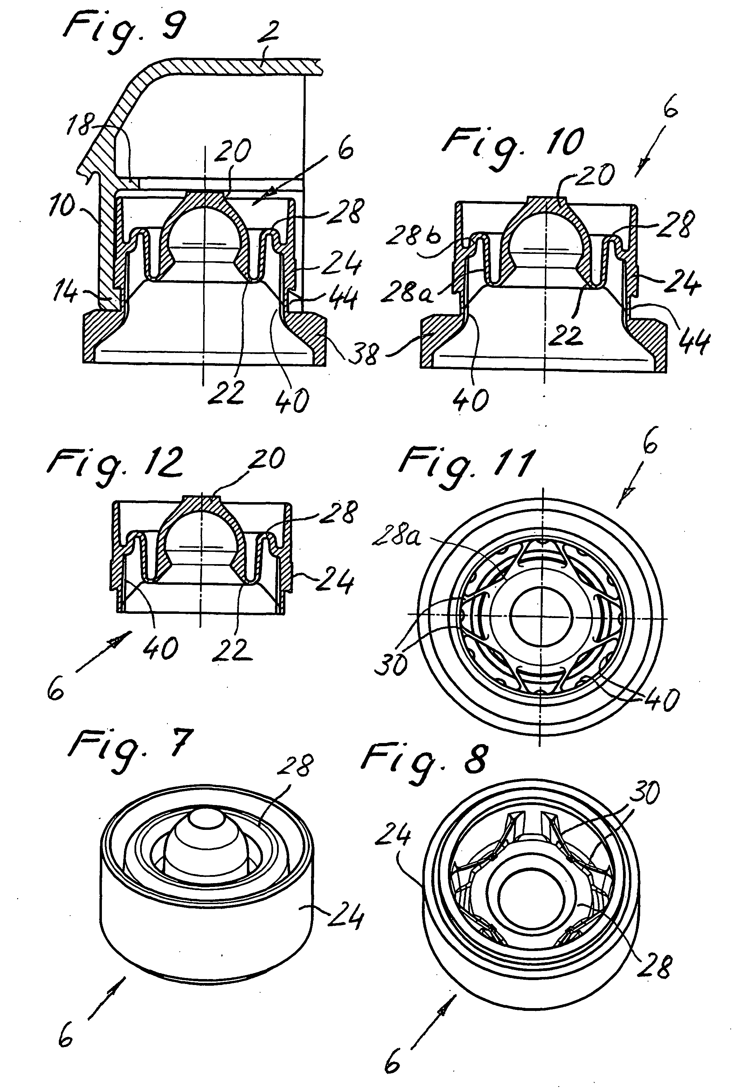

Im Inneren der Ausbuchtung 28 sind mehrere Stege 30 angeordnet, die die Innenwand 28a der Ausbuchtung 28 mit der Außenwand 28b derselben verbinden. Wie insbesondere in den Fign. 6 und 8 zu sehen ist, verlaufen die Stege 30 im wesentlichen tangential zu der Innenwand 28a der Ausbuchtung 28, wobei die Stege 30 paarweise einander so zugeordnet sind, dass die Stege 30 eines Paares in Umfangsrichtung entgegengesetzt zueinander gerichtet sind. Die Stege 30 verhindern ein axiales Ausweichen bzw. Abrollen der Ausbuchtung 28, wie noch genauer erläutert wird.

Das kugelartige Kupplungsteil 8 (s. Fig. 1) besteht aus einem Kugelkopf 32 und einem daran angeformten Befestigungsabschnitt 34, durch den das kugelartige Kupplungsteil 8 am Bauteil 4 festgelegt ist. Im dargestellten Ausführungsbeispiel ist der Befestigungsabschnitt 34 durch eine Schraubverbindung an dem Bauteil 4 festgelegt, wobei der Kugelkopf 32 zu diesem Zweck mit einer Schlüsselaufnahme 36 versehen ist. Der Befestigungsabschnitt 34 kann jedoch auch auf andere Weise mit dem Bauteil 4 verbunden werden und beispielsweise auch einstückig mit diesem ausgebildet sein.

Wie bereits eingangs erwähnt, besteht das pfannenartige Kupplungsteil 6 vorzugsweise aus einem Elastomer auf Polyesterbasis, insbesondere Polybutylenterephthalat (PBT) oder Polyethylenterephthalat (PET). Diese Materialien sind zwar elastisch verformbar, haben jedoch eine relativ hohe Shore-Härte sowie eine ausgezeichnete Wärmeformbeständigkeit (150° C und mehr). Darüber hinaus verfügen sie über eine gute Chemikalienbeständigkeit, insbesondere Dieselölbeständigkeit. In Frage kommen jedoch auch vernetzte Elastomere wie Gummi/Kautschuk, wie ebenfalls bereits eingangs erwähnt wurde. Das kugelartige Kupplungsteil 8 besteht beispielsweise aus einem durch einen Füllstoff verstärkten Kunststoff oder aus Metall.

Um das pfannenartige Kupplungsteil 6 in die Fassung 10 des Bauteils 2 einzusetzen, wird das pfannenartige Kupplungsteil 6 durch die offene Seite der Umfangswand 12 seitlich in die Fassung 10 eingeschoben. Wegen der relativ großen Härte des Materials des pfannenartigen Kupplungsteils 6 wäre es nicht ohne weiteres möglich, das pfannenartige Kupplungsteil 6 in einen geschlossen ausgebildeten Ringbund 14 der Fassung 10 einrasten zu lassen. Bei dem dargestellten Ausführungsbeispiel ist daher der Ringbund 14 mit der Öffnung 16 versehen, durch die das pfannenartige Kupplungsteil 6 in das Innere der Fassung 10 eingeschoben werden kann, wenn das pfannenartige Kupplungsteil 6 manuell entsprechend zusammengedrückt wird. Im eingesetzten Zustand wird dann das pfannenartige Kupplungsteil 6 zwischen dem unteren Ringbund 14 und dem oberen Bund 18 der Fassung 10 formschlüssig gehalten.

Ist das kugelartige Kupplungsteil 8 mit seinem zugehörigen Bauteil 4 in der beschriebenen Weise verbunden, so ist zum Schließen der Steckkupplung lediglich erforderlich, dass durch eine Relativbewegung zwischen den Bauteilen 2 und 4 das kugelartige Kupplungsteil 8 axial in das pfannenartige Kupplungsteil 6 eingesteckt wird, bis der Kugelkopf 32 in die Kugelpfanne 20 einrastet. Der Kugelkopf 32 wird dann auf mehr als der Hälfte seiner Oberseite von der Kugelpfanne 20 umgriffen.

Wie aus Fig. 15 und insbesondere Fig. 16 hervorgeht, ist der Kugelkopf 32 gegenüber der Kugelpfanne 20 um ein bestimmtes Maß überdimensioniert. Die Überdimensionierung wird so gewählt, dass ein spielfreier Sitz auch bei unterschiedlichen Wärmeausdehnungen von Kugelkopf und Kugelpfanne gewährleistet bleibt. Wie die Fign. 15 und 16 zeigen, hat die Innenfläche der Kugelpfanne 20 an ihrem offenen Ende im Bereich ihres Hinterschnitts einen kegelstumpfförmigen Abschnitt 42, der bezüglich einer gedachten Verlängerung der Kugelfläche der Kugelpfanne 20 schräg nach innen angestellt ist. Hierdurch übt die Kugelpfanne 20 eine erhöhte Haltekraft auf den Kugelkopf 32 aus. Zum Lösen der Kupplung ist aufgrund des oben beschriebenen Materials für die Kugelpfanne ohnehin eine relativ hohe Demontagekraft erforderlich, so dass die Steckkupplung eine hohe Sicherheit gegen unbeabsichtigtes Lösen hat.

Im eingebauten und geschlossenen Zustand sorgt die beschriebene Steckkupplung aufgrund ihrer Geometrie und des verwendeten Materials für eine Schwingungsentkopplung zwischen den Bauteilen 2 und 4, und zwar sowohl in axialer wie auch radialer Richtung und daher in beliebigen Zwischenrichtungen im dreidimensionalen Raum. Die diese Schwingungsentkopplung ermöglichenden Ausgleichsbewegungen der Steckkupplung werden durch die wellenförmige Zwischenwand 22 des pfannenartigen Kupplungsteils 6 ermöglicht. Hierbei sorgt die umlaufende Ausbuchtung 28 für die erforderliche Nachgiebigkeit in axialer Richtung. Die Stege 30, die ein Ausweichen bzw. Abrollen der Ausbuchtung 28 verhindern, lassen wegen ihres tangentialen Verlaufs Ausgleichsbewegungen in radialer Richtung zu, wobei sie aufgrund ihres Rückstellvermögens die Ausbuchtung immer wieder zentrieren.

Wie in den Fign. 1, 4 und insbesondere Fig. 13 übertrieben dargestellt, hat die Zwischenwand 22 mit der Ausbuchtung 28 eine von radial innen nach radial außen größere Wandstärke. Die Zwischenwand 22 mit der Ausbuchtung 28 hat somit gewissermaßen eine Federkennlinie entsprechend einer von radial innen nach radial außen härter werdende Feder. Da somit der radialen Ausgleichsbewegungen entgegenwirkende Widerstand von radial innen nach radial außen größer wird, werden die schwingungsentkoppelnden Ausgleichsbewegungen in radialer Richtung im Kraftverlauf gleichmäßig ansteigend aufgenommen und ausgeglichen.

Im übrigen hat das verwendete Material (Elastomer auf Polyesterbasis) ausgezeichnete Spritzgießeigenschaften, so dass sich die Zwischenwand 22 mit der Ausbuchtung 28 extrem dünnwandig herstellen lässt, ohne dass es einer Nachbearbeitung des spritzgegossenen pfannenartigen Kupplungsteils bedarf. Wegen der Chemikalien- und Wärmeformbeständigkeit des verwendeten Materials lässt sich die Steckkupplung, wie bereits erwähnt, auch in kritischen Bereichen beispielsweise in Motornähe einsetzen.

Die in den Fign. 9 bis 11 gezeigte abgewandelte Ausführungsform des pfannenartigen Kupplungsteils 6 entspricht hinsichtlich ihres grundsätzlichen Aufbaus und ihrer grundsätzlichen Funktion dem pfannenartigen Kupplungsteil der vorstehend beschriebenen Ausführungsform, so dass diese nicht nochmals erläutert werden. Unterschiedlich ist, dass bei der Ausführungsform der Fign. 9 bis 11 der Außendurchmesser des pfannenartigen Kupplungsteils 6 und somit der radiale Abstand zwischen der Kugelpfanne 20 und der rohrförmigen Umfangswand 24 kleiner als bei dem vorhergehenden Ausführungsbeispiel ist. Hieraus ergibt sich eine entsprechend geänderte Geometrie der Ausbuchtung 28 insofern, als ihre Außenwand 28b nicht bis zum unteren axialen Ende der rohrförmigen Außenwand 24 verläuft, sondern in einem mittleren Bereich an der rohrförmigen Außenwand 24 angeformt ist, siehe auch Fig. 14. Während somit bei der Ausführungsform der Fign. 4 bis 6 die Ausbuchtung 28 im Längsschnitt größer als eine Halbwelle ist, ist bei der Ausfiihrungsform der Fign. 9 bis 11 die Ausbuchtung 28 im Längsschnitt kleiner als eine Halbwelle. Die Funktionsweise bleibt jedoch im wesentlichen die gleiche.

Ein weiterer Unterschied ist, dass bei der Ausführungsform der Fign. 9 bis 11 an der Innenseite der rohrförmigen Außenwand 24 längs verlaufende Versteifungsrippen 40 vorgesehen sind, die sich von der Anlenkstelle der Zwischenwand 22 bis zum axialen Ende der rohrförmigen Außenwand 24 erstrecken. Die Versteifungsrippen 40 erlauben eine extrem dünnwandige Ausgestaltung einer axialen Verlängerung der rohrförmigen Außenwand 24.

Ferner ist bei dem Ausführungsbeispiel der Fign. 9 bis 11 ein bundförmiger Ansatz 38 am axialen Ende des pfannenartigen Kupplungsteils 24 angeformt. Hierdurch ergibt sich zwischen dem unteren Rand der rohrförmigen Außenwand 24 und dem bundförmigen Ansatz 38 eine Ringnut 44, in die der untere Ringbund 14 der Fassung 10 einrasten kann. Dies sorgt für die Formschlussverbindung zwischen dem pfannenartigen Kupplungsteil 6 und der Fassung 10, ohne dass der obere Rand der rohrförmigen Außenwand 24 an dem oberen Bund 18 der Fassung 10 anliegen muss.

Die in Fig. 12 dargestellte Ausführungsform des pfannenartigen Kupplungsteils 6 entspricht der Ausführungsform der Fign. 9 bis 11, wobei lediglich der bundförmige Ansatz 38 weggelassen wurde. Die formschlüssige Halterung des pfannenartigen Kupplungsteils 6 in der Fassung 10 muss daher in der in Fig. 1 gezeigten Art und Weise erfolgen. Im übrigen ist die Funktionsweise des pfannenartigen Kupplungsteils 6 in Fig. 12 die gleiche wie die der vorhergehenden Ausführungsbeispiele.

## Patentansprüche

1. Steckkupplung zum lösbaren Verbinden eines ersten Bauteils (2) mit einem zweiten Bauteil (4), mit
einem elastisch verformbaren pfannenartigen Kupplungsteil (6), das in eine an dem ersten Bauteil (2) vorgesehene Fassung (10) so einsetzbar ist, dass es darin gehalten wird,
wobei das pfannenartige Kupplungsteil (6) eine Kugelpfanne (20), eine an dieser angeformte, als Einführabschnitt dienende, ringförmige Zwischenwand (22) sowie eine an dieser angeformte rohrförmige Außenwand (24) aufweist, die zumindest einen Teil der Kugelpfanne (20) mit Abstand umgibt und beim Einsetzen des pfannenartigen Kupplungsteils (6) in die Fassung in Anlage an eine Umfangswand (12) der Fassung (10) gelangt, und
einem kugelartigen Kupplungsteil (6), das einen in das pfannenartige Kupplungsteil einzusteckenden Kugelkopf (32) und einen Befestigungsabschnitt (34) zum Festlegen an dem zweiten Bauteil (4) aufweist,
**dadurch gekennzeichnet, dass** die ringförmige Zwischenwand (22) des pfannenartigen Kupplungsteils (6) im Längsschnitt zumindest bereichsweise ein wellenförmiges Profil hat, das durch eine einzelne, axial gerichtete, umlaufende Ausbuchtung (28) der Zwischenwand (22) gebildet ist, und dass zwischen der radial inneren und radial äußeren Wand (28a, b) der Ausbuchtung (28) Stege (30) zum Versteifen der Ausbuchtung (28) in axialer Richtung verlaufen.

2. Steckkupplung nach Anspruch 1, **dadurch gekennzeichnet, dass** die Stege (30) im wesentlichen tangential zur Innenwand (28a) der Ausbuchtung (28) verlaufen.

3. Steckkupplung nach Anspruch 2, **dadurch gekennzeichnet, dass** die Stege (30) paarweise einander so zugeordnet sind, dass die Stege (30) eines Paares in Umfangsrichtung entgegengesetzt zueinander gerichtet sind.

4. Steckkupplung nach einem der Ansprüche 1 bis 3, **dadurch gekennzeichnet, dass** die umlaufende Ausbuchtung (28) an der rohrförmigen Außenwand (24) in einem Bereich eines axialen Endes derselben angeformt ist.

5. Steckkupplung nach einem der Ansprüche 1 bis 3, **dadurch gekennzeichnet, dass** die umlaufende Ausbuchtung (28) an der rohrförmigen Außenwand (24) in einem mittleren Bereich derselben angeformt ist.

6. Steckkupplung nach Anspruch 5, **dadurch gekennzeichnet, dass** an der Innenseite der rohrförmigen Außenwand (24) des pfannenartigen Kupplungsteils (6) längs verlaufende Versteifungsrippen (40) vorgesehen sind, die sich von dem mittleren Bereich bis zu einem axialen Ende der rohrförmigen Außenwand (24) erstrecken.

7. Steckkupplung nach einem der Ansprüche 1 bis 6, **dadurch gekennzeichnet, dass** die ringförmige Zwischenwand (22) des pfannenartigen Kupplungsteils (6) eine gleichförmige Wandstärke hat.

8. Steckkupplung nach einem der Ansprüche 1 bis 6, **dadurch gekennzeichnet, dass** die ringförmige Zwischenwand (22) des pfannenartigen Kupplungsteils (6) eine von radial innen nach radial außen größer werdende Wandstärke hat.

9. Steckkupplung nach einem der vorhergehenden Ansprüche, **dadurch gekennzeichnet, dass** der Kugelkopf (32) des kugelartigen Kupplungsteils (8) gegenüber der Kugelpfanne (20) des pfannenartigen Kupplungsteils (6) überdimensioniert ist, um einen spielfreien Sitz des Kugelkopfes (32) in der Kugelpfanne (20) bei unterschiedlicher Wärmeausdehnung sicherzustellen.

10. Steckkupplung nach Anspruch 9, **dadurch gekennzeichnet, dass** die Innenfläche der Kugelpfanne (20) an ihrem offenen Ende im Bereich eines Hinterschnitts einen kegelstumpfförmigen Abschnitt (42) hat, der bezüglich einer gedachten Verlängerung der Kugelfläche der Kugelpfanne (20) schräg nach innen angestellt ist, um bei geschlossener Steckkupplung eine erhöhte Haltekraft auf den Kugelkopf (32) auszuüben.

11. Steckkupplung nach einem der vorhergehenden Ansprüche, **dadurch gekennzeichnet, dass** das pfannenartige Kupplungsteil (6) aus einem thermoplastischen Elastomer auf Polyesterbasis mit guter Chemikalienbeständigkeit und Wärmeformbeständigkeit besteht.

12. Steckkupplung nach Anspruch 11, **dadurch gekennzeichnet, dass** das Elastomer auf Polyesterbasis ein Polybutylenterephthalat (PBT) oder Polyethylenterephthalat (PET) ist.

13. Steckkupplung nach einem der Ansprüche 1 bis 10, **dadurch gekennzeichnet, dass** das pfannenartige Kupplungsteil (6) aus einem vernetzten Elastomer besteht.

14. Pfannenartiges Kupplungsteil für eine Steckkupplung zum lösbaren Verbinden eines ersten Bauteils (2) mit einem zweiten Bauteil (4), welches pfannenartige Kupplungsteil (6) elastisch verformbar und in eine an dem ersten Bauteil (2) vorgesehene Fassung (10) so einsetzbar ist, dass es darin gehalten wird,
wobei das pfannenartige Kupplungsteil (6) eine Kugelpfanne (20), eine an dieser angeformte, als Einführabschnitt dienende, ringförmige Zwischenwand (22) sowie eine an dieser angeformte rohrförmige Außenwand (24) aufweist, die zumindest einen Teil der Kugelpfanne (20) mit Abstand umgibt und beim Einsetzen des pfannenartigen Kupplungsteils (6) in die Fassung in Anlage an eine Umfangswand (12) der Fassung (10) gelangt,
**dadurch gekennzeichnet,**
**dass** die ringförmige Zwischenwand (22) des pfannenartigen Kupplungsteils (6) im Längsschnitt zumindest bereichsweise ein wellenförmiges Profil hat, das durch eine einzelne, axial gerichtete, umlaufende Ausbuchtung (28) der Zwischenwand (22) gebildet ist, und dass zwischen der radial inneren und radial äußeren Wand (28a, b) der Ausbuchtung (28) Stege (30) zum Versteifen der Ausbuchtung (28) in axialer Richtung verlaufen.

## Claims

1. A plug-in coupling for removably joining a first structural member (2) to a second structural member (4) with
a resiliently deformable female coupling part adapted to be inserted into a socket at the first structural member such that it is retained therein,
the female coupling part (6) adapted to be inserted into a socket (10) at the first structural member (2) such that it is retained therein,
the female coupling part (6) comprising a ball-shaped cup (20), an intermediate annular wall (22) integral with the latter and serving as a guide portion, and a tubular external wall (24) integral with the latter, which external wall surrounds at least a part of the ball-shaped cup (20) in spaced relation thereto and comes into engagement with a peripheral wall (12) of the socket (10) when the female coupling part (6) is inserted into the socket, and
a male coupling part (6) comprising a ball-shaped head (32) to be inserted into the female coupling part, and a fixing portion (34) for securing at the second structural member (4),
**characterized in that** the intermediate annular wall (22) of the female coupling part (6), in an axial cross-section thereof, is of an undulated profile at least in a certain area thereof, which is formed by a single axially directed annular bulge (28) of the intermediate annular wall (22), and that between the radially inner wall and the radially outer wall (28a, b) of the bulge (28) webs (30) extend so as to stiffen the bulge (28) in an axial direction.

2. A plug-in coupling according to claim 1, **characterized in that** the webs extend substantially tangentially to the internal wall (28a) of the bulge (28).

3. The plug-in coupling of claim 2, **characterized in that** the webs (30) are arranged in pairs such that the webs (30) of any pair thereof are inclined in opposite circumferential directions.

4. The plug-in coupling of any of claims 1 to 3, **characterized in that** the annular bulge (28) is integrally connected to the tubular external wall (24) in an area of an axial end of the tubular external wall (24).

5. The plug-in coupling of any of claims 1 to 3, **characterized in that** the annular bulge is integrally connected to the tubular external wall (24) of the female coupling part in an intermediate area of the tubular external wall (24).

6. The plug-in coupling of claim 5, **characterized in that** longitudinally extending stiffening ribs (40) are provided at an internal surface of the tubular external wall (24) of the female coupling part (6) and extend from the intermediate area to an axial end of the tubular external wall (24).

7. The plug-in coupling of any of claims 1 to 6, **characterized in that** the intermediate annular wall (22) of the female coupling part (6) is of uniform wall thickness.

8. The plug-in coupling of any of claims 1 to 6, **characterized in that** the intermediate annular wall (22) of the female coupling part (6) is of a wall thickness increasing in a radially outwards direction.

9. The plug-in coupling of any of the preceding claims, **characterized in that** the ball-shaped head (32) of the male coupling part (8) is overdimensioned with respect to the ball-shaped cup (20) of the female coupling part (6) so as to provide for the ball-shaped head (32) to be received within the ball-shaped cup (20) without any play even under different thermal expansions.

10. The plug-in coupling of claim 9, **characterized in that** the ball-shaped cup (20) has an internal spherical surface merging into a conical surface portion (42) at an open end thereof, which conical surface portion extends radially inwards with respect to the spherical surface so as to provide for increased retention forces acting upon the ball-shaped cup (32) when the plug-in coupling is in a closed condition.

11. The plug-in coupling of any of the preceding claims, **characterized in that** the female coupling part (6) is made of a thermoplastic elastomeric material based on polyester of high chemical resistance and high thermal dimensional resistance.

12. The plug-in coupling of claim 11, **characterized in that** the elastomeric material is polybutylene therephthalate or polyethylene therephthalate.

13. The plug-in coupling of any of claims 1 to 10, **characterized in that** the female coupling part (6) is made of cross-linked elastomeric material.

14. A female coupling part for a plug-in coupling for removably joining a first structural member (2) to a second structural member (4), which female coupling part (6) is resiliently deformable and adapted to be inserted into a socket (10) provided at the first structural member (2) such that it is retained therein,
the female coupling part (6) comprising a ball-shaped cup (20), an intermediate annular wall (22) integral with the latter and serving as a guide portion, and a tubular external wall (24) integral with the latter, which tubular external wall surrounds at least a part of the ball-shaped cup (20) in spaced relation thereto and comes into engagement with a peripheral wall (12) of the socket (10) when the female coupling part (6) is inserted into the socket,
**characterized in that**
the intermediate annular wall (22) of the female coupling part (6), in an axial cross-section thereof, is of an undulated profile at least in a certain area thereof, which is formed by a single axially directed annular bulge (28) of the intermediate annular wall (22), and that between the radially inner wall and the radially outer wall (28a, b) of the bulge (28) webs (30) extend so as to stiffen the bulge (28) in an axial direction.

## Revendications

1. Couplage par emmanchement destiné à relier par une liaison démontable un premier élément (2) à un second élément (4), comprenant :
une partie de couplage en forme de cuvette (6), qui peut être emboîtée dans une monture (10) prévue sur la première partie (2) de manière à être retenue dans cette monture,
dans lequel la partie de joint en forme de cuvette (6) présente une cuvette sphérique (20), une paroi intermédiaire annulaire (22) venue de formage avec cette cuvette, qui sert de segment d'entrée, ainsi qu'une paroi extérieure tubulaire (24) venue de formage avec cette dernière, qui entoure au moins une partie de la cuvette sphérique (20) à un certain écartement, et qui, lors de l'insertion de la partie de couplage en forme de cuvette (6) dans la monture, se place en appui contre une paroi périphérique (12) de la monture (10) et,
une partie de couplage en forme de sphère (6) qui comprend une tête sphérique (32) destinée à être emmanchée dans la partie de couplage en forme de cuvette, et un segment de fixation (34) destiné à la fixation au second élément (4),
**caractérisé en ce que** la paroi intermédiaire annulaire (22) de la partie de couplage en forme de cuvette (6) a en coupe longitudinale, au moins par endroits, un profil ondulé qui est formé par un unique bombement périphérique (28) dirigé axialement de la paroi intermédiaire (22), et **en ce que** des entretoises (30) s'étendent dans la direction axiale entre la paroi radialement intérieure et la paroi radialement extérieure (28a, b) du bombement (28) pour raidir le bombement (28).

2. Couplage par emmanchement selon la revendication 1, **caractérisé en ce que** les entretoises (30) s'étendent sensiblement tangentiellement à la paroi intérieure (28a) du bombement (28).

3. Couplage par emmanchement selon la revendication 2, **caractérisé en ce que** les entretoises (30) sont combinées entre elles par paires de telle manière que les entretoises (30) d'une même paire soient dirigées l'une en sens inverse de l'autre dans la direction circonférentielle.

4. Couplage par emmanchement selon une des revendications 1 à 3, **caractérisé en ce que** le bombement circonférentiel (28) est venu de formage avec la paroi extérieure tubulaire (24) dans une région d'une extrémité axiale de cette dernière.

5. Couplage par emmanchement selon une des revendications 1 à 3, **caractérisé en ce que** le bombement périphérique (28) est venu de formage avec la paroi extérieure tubulaire (24) dans une région médiane de cette dernière.

6. Couplage par emmanchement selon la revendication 5, **caractérisé en ce que**, sur le côté intérieur de la paroi tubulaire extérieure (24) de la partie de couplage (6) en forme de cuvette, sont prévues des nervures raidisseuses (40) s'étendant longitudinalement, qui s'étendent de la région médiane jusqu'à une extrémité axiale de la paroi extérieure tubulaire (24).

7. Couplage par emmanchement selon une des revendications 1 à 6, **caractérisé en ce que** la paroi intermédiaire annulaire (22) de la partie de couplage (6) en forme de cuvette a une épaisseur de paroi uniforme.

8. Couplage par emmanchement selon une des revendications 1 à 6, **caractérisé en ce que** la paroi intermédiaire annulaire (22) de la partie de couplage (6) en forme de cuvette a une épaisseur de paroi qui croît radialement de l'intérieur vers l'extérieur.

9. Couplage par emmanchement selon une des revendications précédentes, **caractérisé en ce que** la tête sphérique (32) de la partie de couplage (8) en forme de sphère est surdimensionnée relativement à la cuvette sphérique (20) de la partie de couplage en forme de cuvette (6), pour assurer un appui sans jeu de la tête sphérique (32) dans la cuvette sphérique (20) en cas de dilatation thermique différente.

10. Couplage par emmanchement selon la revendication 9, **caractérisé en ce que** la surface intérieure de la cuvette sphérique (20) présente, à son extrémité ouverte, dans la région d'une contre-dépouille, un segment (42) en forme de tronc de cône qui est disposé obliquement vers l'intérieur par rapport à un prolongement imaginaire de la surface sphérique de la cuvette sphérique (20), pour exercer une plus grande force de retenue sur la tête sphérique (32) lorsque le joint à emmanchement est fermé.

11. Couplage par emmanchement selon une des revendications précédentes, **caractérisé en ce que** la partie de couplage en forme de cuvette (6) est faite en un élastomère thermoplastique à base de polyester, présentant une bonne résistance aux produits chimiques et une bonne tenue de forme à la chaleur.

12. Couplage par emmanchement selon la revendication 11, **caractérisé en ce que** l'élastomère à base de polyester est un polytéréphtalate de butylène (PBT) ou un polytéréphtalate d'éthylène (PET).

13. Couplage par emmanchement selon une des revendications 1 à 10, **caractérisé en ce que** la partie de couplage en forme de cuvette (6) est faite en un élastomère réticulé.

14. Partie de couplage en forme de cuvette pour un couplage par emmanchement destiné à relier un premier élément (2) à un second élément (4) par une liaison démontable, laquelle partie de couplage en forme de cuvette (6) est élastiquement déformable et peut être insérée dans une monture (10) prévue sur le premier élément (2) de telle manière qu'elle soit retenue dans cette dernière,
dans lequel la partie de couplage en forme de cuvette (6) présente une cuvette sphérique (20), une paroi intermédiaire annulaire (22) venue de formage avec cette cuvette, qui sert de segment d'entrée, ainsi qu'une paroi extérieure tubulaire (24) venue de formage avec cette dernière, qui entoure au moins une partie de la cuvette sphérique (20) à un certain écartement, et qui, lors de l'insertion de la partie de couplage en forme de cuvette (6) dans la monture, se place en appui contre une paroi périphérique (12) de la monture (10),
**caractérisé en ce que** la paroi intermédiaire annulaire (22) de la partie de couplage en forme de cuvette (6) a en coupe longitudinale, au moins par endroits, un profil ondulé qui est formé par un unique bombement périphérique (28) de la paroi intermédiaire (22) dirigé axialement, et **en ce que** des entretoises (30) s'étendent dans la direction axiale entre la paroi radialement intérieure et la paroi radialement extérieure (28a, b) du bombement (28) pour raidir le bombement (28).
